(19) Europäisches Patentamt
European Patent Office
Office européen des brevets

(11) **EP 2 891 384 B1**

(12) **FASCICULE DE BREVET EUROPEEN**

(45) Date de publication et mention de la délivrance du brevet:
**05.08.2020 Bulletin 2020/32**

(21) Numéro de dépôt: **12772347.6**

(22) Date de dépôt: **29.08.2012**

(51) Int Cl.:
***H05B 47/10*** *(2020.01)* ***H05B 41/24*** *(2006.01)*
***H05B 41/295*** *(2006.01)* ***H05B 47/185*** *(2020.01)*

(86) Numéro de dépôt international:
**PCT/FR2012/051954**

(87) Numéro de publication internationale:
**WO 2014/033371 (06.03.2014 Gazette 2014/10)**

(54) **DISPOSITIF ÉLECTRONIQUE DE CONTRÔLE ET D'ALIMENTATION DE LAMPES À DÉCHARGE**

ELEKTRONISCHE VORRICHTUNG ZUR REGELUNG UND STROMVERSORGUNG VON ENTLADUNGSLAMPEN

ELECTRONIC DEVICE FOR CONTROLLING AND POWERING DISCHARGE LAMPS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**08.07.2015 Bulletin 2015/28**

(73) Titulaire: **LIGHT AND SAVE**
**26600 Granges les Beaumont (FR)**

(72) Inventeurs:
- **MAILLACH, Pascal**
**F-76720 Auffay (FR)**
- **FONTENOY, Philippe**
**F-07610 Lemps (FR)**

(74) Mandataire: **Opilex**
**32, rue Victor Lagrange**
**69007 Lyon (FR)**

(56) Documents cités:
**WO-A1-2005/036726** **WO-A2-03/102890**
**US-A- 4 132 925** **US-A- 4 749 916**
**US-A- 5 747 942** **US-A1- 2011 122 165**
**US-B2- 6 771 029**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 891 384 B1

## Description

La présente invention concerne un dispositif d'alimentation, de contrôle et de commande de lampes à décharge dont, entre autres, des lampes ou tubes fluorescents, organisés en segments d'éclairage.

La présente invention s'applique par exemple à l'éclairage ambiant de bâtiments de grande surface par des lampes à décharge et vise à améliorer les performances énergétiques et à augmenter les fonctionnalités de contrôle des lampes, et au moyen d'une installation électrique relativement simple ou d'une installation préexistante.

Les lampes à décharges comprennent une enveloppe perméable aux rayons lumineux contenant un gaz susceptible d'être conducteur par effet d'ionisation et d'émettre après excitation un rayonnement lumineux. Les lampes à décharge comportent des électrodes dotées ou non de filaments assurant l'émission d'électrons lorsqu'ils sont soumis à un courant électrique. Sont qualifiées de lampes à décharges, entres autres types, les lampes fluorescentes, les lampes au néon, les lampes à vapeur de sodium, les lampes à vapeur de mercure, les lampes à iodure métallique.

De par leurs caractéristiques intrinsèques, les lampes à décharge ne peuvent pas être alimentées directement par la tension du secteur. En effet, l'ionisation de la lampe nécessite d'établir une conduction entre les électrodes à une différence de potentiel très supérieure à la tension disponible sur le secteur. En outre, l'impédance négative du milieu ionisé provoquerait une surintensité importante susceptible de détruire la lampe.

Dans l'état de l'art actuel, une lampe à décharge telle que par exemple, une lampe fluorescente intègre dans son circuit d'alimentation un dispositif appelé "ballast" qui assure l'allumage et, lorsque le flux lumineux est obtenu, limite le courant à un niveau acceptable pour ne pas détériorer la lampe. Deux technologies sont utilisées pour réaliser ce ballast. La première technologie, appelée "ferromagnétique" est fondée sur une technique élémentaire et historique. L'autre technologie plus évoluée techniquement et plus récente, est appelée "électronique".

Dans le cas d'un ballast dit "ferromagnétique", le ballast se compose d'une bobine de forte inductance destinée à produire la surtension générant l'allumage de la lampe à décharge suite à une rupture brusque du courant et à limiter le courant du secteur à un niveau acceptable pour la lampe. La rupture brusque assurant l'allumage est réalisée par un dispositif bilame thermique appelé "starter". Le rôle du starter est dans un premier temps de court-circuiter la lampe au travers des ses électrodes pour provoquer l'échauffement des filaments des électrodes par effet Joule. Puis lorsqu'une température suffisante des filaments est atteinte, l'ouverture du bilame est déclenchée, ce qui permet de créer une coupure brusque du courant. Cela génère aux bornes de la bobine, une surtension instantanée selon la formule $V=-Ldi/dt$. Cette surtension est suffisante pour produire une conduction d'électrons entre les deux électrodes. Cette conduction produit, par effet ionisant, un état plasmatique luminescent dans la lampe. Après conduction, l'impédance de la lampe chute. Le courant traversant le milieu ionisé est alors limité par l'impédance de la bobine d'inductance qui suit la formule $Z=L.\omega$ avec $\omega$ correspondant à la pulsation du secteur (la fréquence du secteur est par exemple de 50 Hz ou 60 Hz, ce qui correspond à une pulsation de 314 rad/s ou 377 rad/s).

Dans le cas d'un ballast dit "électronique", la fonction d'allumage de la lampe à décharge utilise généralement l'effet résonant d'un circuit série constitué d'une bobine "L" et d'un condensateur "C" pour créer la surtension produisant la conduction. Une fonction supplémentaire assure éventuellement et temporairement le passage d'un courant au travers des filaments constituant les électrodes pour provoquer leur échauffement dans le but de faciliter l'allumage et d'améliorer la durabilité de la lampe. D'une façon générale, il est admis que la différence de potentiel nécessaire pour assurer la conduction entre les deux électrodes d'une lampe à décharge diminue de façon significative lorsque ces dernières sont échauffées à une température de l'ordre de 1000°C.

Le ballast "électronique" assure la mise en forme de la tension du secteur pour permettre sa distribution aux bornes des électrodes de la lampe à décharge. La forme du courant traversant la lampe à décharge est généralement une sinusoïde dont la fréquence est de l'ordre de quelques dizaines de milliers d'Hertz. Les ballasts électroniques fonctionnent généralement en simple alternance, c'est-à-dire que le courant ayant traversé la lampe à décharge est accumulé dans une capacité pour être ensuite restitué pour produire l'alternance inverse. Une bobine de faible impédance, incluse dans le circuit, assure l'amortissement des surintensités générées par la capacité ainsi que la limitation du courant à la fréquence de fonctionnement prévue. Afin de maintenir les électrodes à une température suffisamment élevée pour assurer l'émission des électrons, le courant traversant la lampe à décharge chemine également pour partie au travers des filaments.

Les ballasts électroniques sont conçus pour alimenter une ou plusieurs lampes à décharge et éventuellement s'adapter à des caractéristiques de lampes différentes.

Certains ballasts électroniques disponibles sur le marché sont dotés de fonctionnalités évoluées permettant par exemple la variation de l'intensité lumineuse de la lampe (fonction appelée "gradation") et peuvent communiquer avec un dispositif de commande à distance par une liaison filaire selon des protocoles pour certains normalisés par les fabricants tel que le protocole DALI (Digital Addressable Lighting Interface selon un terme anglo-saxon bien connu de l'homme du métier). L'exploitation de cette fonctionnalité nécessite l'installation d'un réseau câblé entre les ballasts électroniques et les dispositifs de commande à distance.

La caractéristique commune à l'ensemble de ces ballasts est qu'ils sont conçus pour être installés dans des luminaires intégrant de une à quatre lampes à décharges, ces luminaires étant alimentés par la tension du secteur et les lampes à décharge étant reliées au(x) ballast(s) à l'intérieur du luminaire par des conducteurs électriques de faible longueur.

La technologie utilisée dans le ballast occasionne des pertes d'énergie qui sont combinées avec la performance propre de la source lumineuse pour déterminer l'efficacité lumineuse de l'éclairage. Ces pertes sont relativement plus importantes pour les ballasts ferromagnétiques que pour les ballasts électroniques. Néanmoins, elles s'appliquent à chaque ballast et donc, d'une façon générale, à chaque luminaire.

Il est connu de la demande de brevet US2006/0186834, l'utilisation d'un ballast pour alimenter plusieurs lampes en parallèle.

Il est connu du brevet US5371442, un circuit comprenant une pluralité de ballasts chacun dédiés à un luminaire déporté de quelques mètres.

Les documents WO03/102890A2, US5,747,942A, US4,749,91 A, US4,132,925A, WO2005/036726A1, US 2011/122165 A1et US6,771,029B2 divulguent aussi des dispositifs électroniques de contrôle et d'alimentation de plusieurs lampes à décharge. En particulier, le document WO2005/036726A1 divulgue un dispositif selon le préambule de la revendication 1.

Au vu de ce qui précède, un but de l'invention est de proposer un dispositif d'alimentation et de contrôle de lampes à décharge qui permette de résoudre au moins en partie les inconvénients mentionnés ci-dessus et en particulier, de proposer un générateur dit « Bloc Ballast » qui puisse être déporté par rapport à une pluralité de lampes à décharge tout en augmentant le rendement énergétique de l'alimentation des lampes et en permettant un contrôle efficace des lampes à décharge.

L'invention est définie par la revendication indépendante 1. Des modes de réalisation préférés sont définis dans les revendications dépendantes.

Selon un aspect, il est proposé un dispositif électronique de contrôle et d'alimentation de lampes à décharge comprenant :

- un générateur de signaux de puissance ; et
- une pluralité de blocs de contrôle dédiés chacun au contrôle d'au moins une lampe à décharge.

Selon une caractéristique générale de l'invention, les blocs de contrôle sont reliés en parallèle audit générateur par un unique bus de puissance et chacun des blocs de contrôle comprend pour chacune des lampes auxquelles le bloc est dédié, un circuit électronique relié à ladite lampe et au bus de puissance et comprenant des moyens de résonnance capables de résonner à une fréquence d'un signal de puissance dudit générateur de manière à créer une surtension aux bornes de ladite lampe à décharge et déclencher son allumage.

On segmente ainsi l'étage d'éclairage comprenant les moyens de résonnance et les lampes à décharge de l'étage de génération du signal de puissance. Il est ainsi possible d'alimenter plusieurs lampes à décharge par un générateur commun appelé également "Bloc-Ballast", ces sources lumineuses pouvant être déportées de plusieurs dizaines de mètres du générateur les alimentant. Le signal électrique de puissance n'est pas nécessairement périodique. Au contraire, la résonnance peut être obtenue lorsqu'une fréquence instantanée du signal de puissance correspond à celle des moyens de résonnance pendant une durée suffisante pour déclencher l'allumage de la lampe à décharge, c'est-à-dire de l'ordre de 250 ms.

La consommation d'énergie liée à la génération du signal de puissance est donc regroupée au sein d'un unique générateur. Le principe de l'allumage utilisant la résonnance avec le signal électrique de puissance permet d'obtenir un générateur commun présentant une consommation réduite par rapport à la somme des consommations de ballasts dédiés pour chacune des lampes à décharge.

De surcroit, on regroupe de une à quatre lampes à décharge sur un même bloc de contrôle gérant des fonctionnalités intelligentes en liaison avec le générateur. L'ensemble constitué du bloc de contrôle et des lampes à décharge auxquelles il est relié est appelé "Luminaire Intelligent".

En combinant la possibilité d'alimenter plusieurs lampes avec un seul générateur et la possibilité d'alimenter des lampes déportées par rapport au générateur, on obtient un dispositif électronique qui peut s'adapter aux contraintes d'éclairage d'un bâtiment tout en permettant une consommation, une maintenance réduites et un contrôle efficace.

Selon un mode de réalisation, chacun des blocs de contrôle comprend un module de contrôle des circuits électroniques capable de communiquer via un canal de communication bidirectionnelle avec un module de communication du générateur, le générateur étant capable de contrôler les circuits électroniques de chacun des blocs de contrôle au moyen de ladite communication entre le générateur et le module de contrôle.

Ce contrôle permet au générateur de pouvoir provoquer notamment l'allumage, l'extinction ou le préchauffage de chacune des lampes des blocs de contrôle auxquels il est relié.

Selon un mode de réalisation, le canal de communication bidirectionnelle est réalisé au moyen de la modulation des courants porteurs du bus de puissance.

Ainsi, il n'est pas nécessaire de réaliser un bus pour la communication et un bus pour la puissance. Le bus pour la puissance peut être réutilisé pour la communication à l'aide de la technologie des courants porteurs.

Selon un autre mode de réalisation, le canal de communication bidirectionnelle est un bus de communication dédié reliant le générateur à chacun des blocs de contrôle.

Selon une caractéristique de l'invention, le générateur est adapté pour ajuster la fréquence, l'amplitude et/ou la forme du signal de puissance en fonction de la communication avec un module de contrôle d'un bloc de contrôle.

Le générateur peut ainsi ajuster la fréquence du signal électrique de puissance pour la faire correspondre avec la fréquence de résonnance des moyens de résonnance. Après l'allumage, le générateur peut également ajuster l'amplitude et la fréquence pour permettre une variation de l'intensité lumineuse émise par les lampes à décharge. Par ailleurs, l'ajustement de la forme permet un ajustement de la quantité de puissance transmise au bloc de contrôle.

Etant donné que le générateur contrôle à la fois les circuits électroniques et la fréquence du signal de puissance, il peut changer la configuration desdits circuits électroniques en fonction de la fréquence du signal électrique de puissance qu'il génère. Le générateur peut notamment déclencher une configuration d'un ou plusieurs circuits électroniques selon laquelle les moyens de résonnance reçoivent le signal de puissance et produisent une surtension aux bornes de la lampe à décharge en même temps qu'il génère un signal de puissance à la fréquence de résonnance.

Selon un mode de réalisation, les moyens de résonnance comprennent un composant inductif et un composant capacitif et le circuit électronique est configuré pour fonctionner suivant une configuration normale dans laquelle le composant inductif est branché en série avec la lampe à décharge et le composant capacitif n'est pas branché et une configuration d'allumage dans laquelle le composant inductif est branché en série avec la lampe à décharge et le composant capacitif est branché en parallèle de la lampe à décharge, les configurations étant activables sélectivement par le module de contrôle.

Ainsi, les moyens de résonnance sont simples à obtenir et à contrôler. Par exemple, le générateur va déclencher la configuration d'allumage d'une pluralité de circuits électroniques en même temps qu'il génère un signal de puissance à la fréquence de résonnance pour réaliser l'allumage des lampes à décharges de ladite pluralité de circuits électroniques.

Le circuit électronique peut comprendre un deuxième composant capacitif branché entre le composant inductif et la lampe à décharge, le deuxième composant capacitif pouvant être court-circuité par un premier moyen de commutation du circuit électronique pour permettre un branchement direct du composant inductif sur la lampe à décharge ou un branchement du composant inductif sur la lampe à décharge au travers dudit deuxième composant capacitif.

On peut donc court-circuiter ou non le deuxième composant capacitif. Lorsqu'il n'est pas court-circuité, le deuxième composant capacitif permet de diminuer l'impédance pour obtenir une intensité plus élevée. Cette intensité plus élevée permet alors d'échauffer les électrodes de la lampe à décharge.

Selon une caractéristique supplémentaire de ce mode de réalisation, le circuit électronique comprend un troisième composant capacitif branché entre les deux électrodes de la lampe à décharge, le troisième composant capacitif pouvant être court-circuité par un deuxième moyen de commutation du circuit électronique pour permettre un raccordement direct des deux électrodes de la lampe à décharge ou un raccordement desdites deux électrodes au travers dudit troisième composant capacitif.

Le troisième composant capacitif permet, lorsqu'il n'est pas court-circuité, de conserver un courant minimal dans les filaments des électrodes. Selon une configuration de préchauffage au cours de laquelle une grande partie du courant du signal électrique de puissance traverse les deux électrodes pour provoquer leur échauffement par effet Joule, on peut court-circuiter le troisième composant capacitif. Par contre, lorsque le signal électrique de puissance est utilisé pour permettre l'allumage ou la conservation de l'allumage de la lampe à décharge on peut conserver le raccordement des deux électrodes via le troisième composant capacitif pour permettre de conserver un courant minimal qui traverse les électrodes. Ainsi, elles conservent une température minimale.

Selon encore une caractéristique supplémentaire de ce mode de réalisation, le circuit électronique comprend un troisième moyen de commutation capable d'isoler ledit circuit électronique du bus de puissance.

On peut ainsi allumer ou éteindre une lampe à décharge d'un bloc de contrôle.

Selon une caractéristique, le module de contrôle est capable de contrôler les moyens de commutation de chacun des circuits électroniques.

Le module de contrôle est notamment capable de contrôler les moyens de commutation de chacun des circuits électroniques en fonction de la communication avec le module de communication du générateur. En outre, le module de contrôle peut également modifier la configuration activée (allumage ou normale) en fonction de cette communication.

Le contrôle des configurations allumage ou normale et des moyens de commutation permet d'activer une pluralité de configurations du circuit électronique correspondant à toutes les différentes étapes de fonctionnement d'une lampe à décharge (préchauffage, allumage, maintien de l'allumage). Ces étapes sont donc contrôlables à l'aide du module de contrôle et peuvent également être contrôlées via le générateur qui communique avec ledit module de contrôle.

Selon un mode de réalisation, le bloc de contrôle comprend au moins un capteur choisi parmi un capteur de luminosité, un capteur de température, un capteur du flux lumineux réfléchi par les surfaces éclairées par les lampes à décharge du bloc de contrôle et un capteur de présence infrarouge, le module de contrôle étant relié audit au moins un capteur.

Le module de contrôle de chaque bloc de contrôle est en outre doté d'une capacité de traitement programmable intégré et il peut ainsi mesurer des données à l'aide des capteurs dont le bloc de contrôle est équipé.

Parmi les capteurs, on peut compter un capteur de température qui permet d'avoir une information sur la température dans le bloc de contrôle, un capteur infrarouge qui permet d'avoir une information sur le nombre de personnes aux abords du bloc de contrôle et des lampes à décharge, un capteur de luminosité qui permet d'avoir une information sur la luminosité ambiante et un capteur de flux lumineux réfléchi par les surfaces éclairées par les lampes à décharge qui permet d'avoir une information sur le flux lumineux généré par les lampes à décharges contrôlées.

Le module de contrôle peut ainsi activer les différentes configurations et/ou contrôler les moyens de commutation en fonction des mesures réalisées à l'aide des capteurs.

Le module de contrôle peut ainsi par exemple allumer ou éteindre une lampe à décharge en fonction de la luminosité ambiante (à l'aide du capteur de luminosité) et/ou de la présence de personnes (à l'aide du capteur infrarouge). Il peut également déclencher ou non une période de préchauffage en fonction de la température dans le bloc de contrôle équipé des lampes à décharge.

Selon une caractéristique de ce mode de réalisation, le module de contrôle est capable de communiquer les résultats des mesures réalisées à l'aide dudit au moins un capteurs au générateur.

Le générateur peut donc effectuer un contrôle à distance efficace des blocs de contrôle puisqu'il dispose de ces mesures.

Selon un autre mode de réalisation, le générateur comprend un étage de correction du facteur de puissance produisant à partir de la tension secteur, une tension continue supérieure à 300 volts.

Il est ainsi possible d'ajuster le facteur de puissance pour améliorer le rendement en augmentant la puissance absorbée à partir du secteur.

Selon une caractéristique de ce mode de réalisation, le générateur comprend un étage de conversion doté d'un pont de transistors en H pour produire à partir de ladite tension continue ledit signal de puissance, ledit signal de puissance étant alternatif.

Le pont en H présente la caractéristique d'avoir une faible perte tout en permettant une génération efficace d'un signal alternatif. Un signal alternatif est un signal composé de cycles d'alternance positive pendant laquelle l'amplitude du signal est positive et de cycles d'alternance négative pendant laquelle le signal a une amplitude négative. Dans un signal alternatif chaque cycle d'alternance positive peut être suivi d'un cycle d'alternance négative. Un tel signal alternatif peut également être périodique dans le cas où l'ensemble composé d'un cycle d'alternance positive et d'un cycle d'alternance négative se répète pendant une durée significative (de l'ordre de quelque dizaines de cycles).

Avec un signal alternatif, on obtient ainsi un générateur qui fonctionne en double alternance, il n'est plus nécessaire d'équiper le générateur d'une capacité qui produit l'alternance inverse ni d'une bobine pour amortir les surtensions.

Selon un autre aspect de l'invention, il est proposé un ensemble comprenant une centrale informatique et au moins un dispositif tel que décrit ci-dessus, ladite centrale comprenant des moyens de traitement et d'archivage et un moyen de communication, ledit générateur du dispositif comprenant en outre un moyen de communication configuré pour communiquer avec le moyen de communication de ladite centrale informatique.

Il est ainsi proposé un système d'éclairage comprenant plusieurs segments, chaque segment correspondant à un dispositif électronique de contrôle et d'alimentation des lampes à décharge tel que décrit ci-dessus. Le système d'éclairage est contrôlé par une centrale informatique qui peut communiquer avec chacun des générateurs des dispositifs. La centrale informatique peut également, à travers les générateurs, communiquer avec chacun des modules de contrôle de chacun des dispositifs pour, par exemple, activer ou éteindre une lampe à décharge ou récupérer la mesure d'un capteur.

La présente invention consiste donc à relier un ensemble de dispositifs comprenant un générateur à une centrale informatique à l'aide par exemple d'une liaison spécialisée. La centrale informatique est dotée de capacités de traitement et d'archivage de données ainsi que d'un accès au réseau Internet. A l'aide de cet accès au réseau Internet il est possible de piloter le fonctionnement des générateurs et donc l'éclairage des dispositifs ou segments et également de collecter des informations quantitatives et qualitatives sur le fonctionnement de l'installation. Dans une réalisation préférentielle, la liaison spécialisée comprend une communication par radio fréquence ou est fondée sur une modulation du courant porteur que constitue l'alimentation secteur.

D'autres avantages et caractéristiques de l'invention apparaîtront à l'examen de la description détaillée d'un mode de réalisation de l'invention, nullement limitatif, et des dessins annexés sur lesquels :

- la figure 1 illustre un ensemble d'éclairage selon l'invention ;
- la figure 2 illustre plus en détail le générateur;
- la figure 3 illustre plus en détail un bloc de contrôle; et
- la figure 4 illustre plus en détail la centrale informatique.

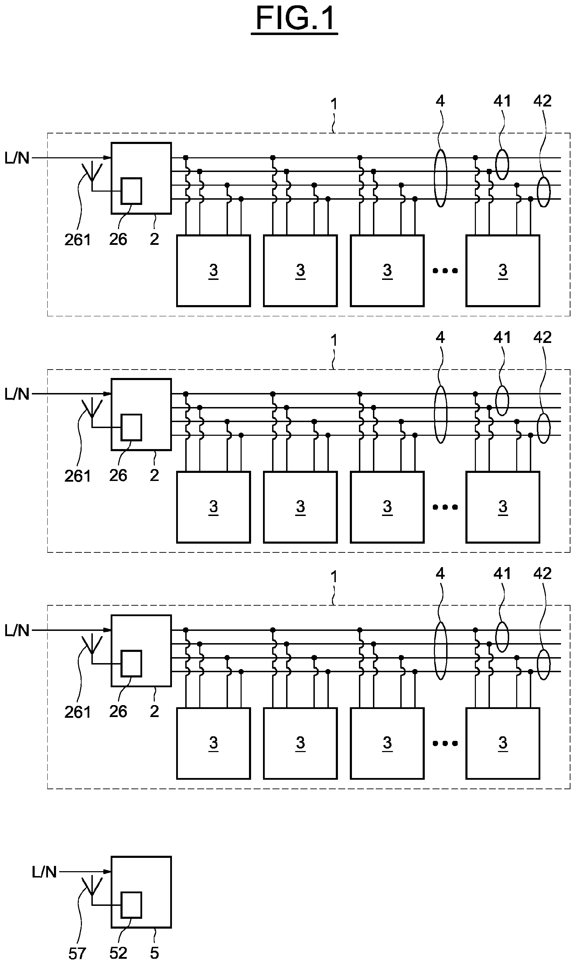

La figure 1 illustre un système d'éclairage comprenant une centrale informatique 5 et une pluralité de dispositifs électroniques 1, chacun des dispositifs électroniques étant composé de plusieurs blocs de contrôle 3 et d'un générateur 2. Chacun des dispositifs 1 correspond à un segment du système d'éclairage.

Le générateur 2 de chaque dispositif est relié aux blocs de contrôle 3 du dispositif via un bus 4. Les blocs de contrôle sont branchés en parallèle sur ce bus 4. Le générateur 2 alimente via ce bus chacun des blocs de contrôle avec un signal électrique de puissance SEP. Chacun des blocs de contrôle 3 est relié à au moins une lampe à décharge.

Par ailleurs, le générateur 2 est capable de communiquer via un module de communication 26 et une antenne 261 avec la centrale informatique 5 munie d'un module de communication 52 et d'une antenne 57. Par exemple, les modules de communication 26 et 52 sont des modems radiofréquences pour communiquer via les antennes 261 et 57 sur la bande de fréquence 2,4 GHz ou 900 kHz.

La centrale informatique 5 est connectée à de multiples dispositifs électroniques 1. Les informations et données transmises par chacun des générateurs 2 des dispositifs électroniques 1 à la centrale informatique 5 concernent par exemple la durée de fonctionnement des lampes à décharges du dispositif 1 et leur consommation énergétique ainsi que l'inventaire des défaillances des composants du dispositif concerné.

Le générateur 2 est alimenté par une tension secteur L/N (L et N sont des acronymes bien connus de l'homme du métier signifiant respectivement phase et neutre) et génère un signal électrique de puissance sur le bus 4. De plus, le générateur 2 échange des informations sur le bus 4 avec les blocs de contrôle 3.

Le bus 4 est un bus filaire qui comporte selon un mode de réalisation, une ligne de conducteurs électriques de puissance 41 appelée "Ligne de Puissance" pour transporter le signal électrique de puissance SEP et une ligne de conducteurs électriques de communication 42 appelée "Ligne de Communication" pour transporter les informations échangées entre le générateur 2 et les blocs de contrôle 3. Selon ce mode de réalisation, par exemple la Ligne de Communication 42 utilise un format de transmission série avec des signaux électriques flottants selon le standard RS485.

Selon un autre mode de réalisation, la ligne de conducteurs électriques de communication n'est pas nécessaire et pour échanger les informations entre le générateur 2 et les blocs de contrôle 3, on utilise la modulation des courants porteurs de la ligne de puissance 41.

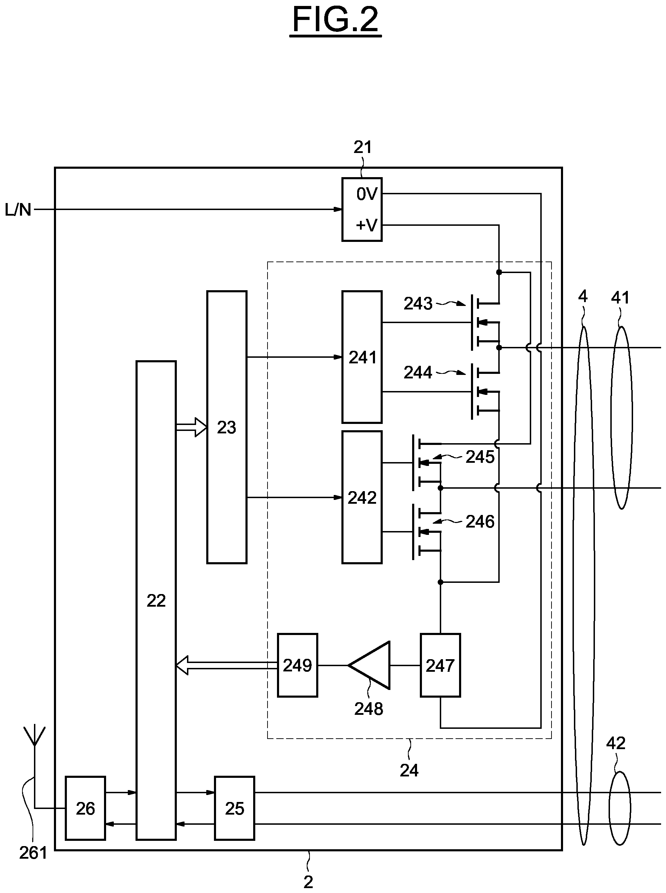

La figure 2 illustre un générateur 2 comprenant outre les composants référencés 261 et 26 déjà décrits un bloc 21 d'alimentation, un bloc 22 de gestion, un bloc 24 de puissance, un bloc 23 réalisant une fonction logique pour contrôler le bloc 24 et un bloc 249 de conversion analogique numérique.

Le bloc 21 est un module d'alimentation secteur à correcteur de facteur de puissance PFC (selon un acronyme anglo-saxon bien connu de l'homme du métier signifiant Power Factor Correction). Le bloc 21 délivre une tension +V continue comprise entre 300 et 400 Volts à partir de la tension alternative du secteur L/N.

Le bloc 22 assure la gestion du processus de fonctionnement du générateur 2, il dispose d'une interface de communication 25 reliée à la Ligne de Communication 42 et est également relié au module 26. Le microcontrôleur 22 contrôle ainsi le dialogue au travers de la Ligne de Communication 42 du bus 4 et le dialogue au travers de la liaison sans fil 261. Par exemple, le bloc 22 est réalisé sous la forme d'un microcontrôleur programmable qui gère au moyen d'un programme le fonctionnement du générateur 2.

Le bloc 24 comprend quatre transistors à faible résistance passante et commutation rapide 243, 244, 245, 246 structurés en pont en H. Ces quatre transistors 243, 244, 245, 246 sont pilotés par deux circuits de contrôle 241, 242, les circuits de contrôle étant commandés par des signaux de commande produits par le module 23. Le module 23 génère les signaux de commande du pont en H sous le contrôle du bloc 22. Le bloc 24 génère ainsi le signal de puissance SEP sous la forme d'une succession de niveaux de tension +V de polarité alternée, éventuellement séparés par des durées où la tension est nulle.

Par ailleurs le bloc 24 est équipé d'un capteur de courant 247 dont le signal de mesure est conditionné par un circuit analogique 248 et est converti en valeur digitale par le convertisseur analogique-numérique 249 pour être acquis par le bloc 22. Le bloc 22 va alors contrôler le module 23 en fonction du signal de mesure conditionné et converti.

Le bloc 22 contrôle ainsi la forme du signal électrique de puissance SEP véhiculé sur la Ligne de Puissance 41 du bus 4.

Selon un mode de réalisation, la forme du signal électrique de puissance SEP est produite par une fonction logique du bloc 23, les paramètres de contrôle de ladite fonction logique étant transmis sous forme de signaux de contrôle par le microcontrôleur 22.

La forme du signal électrique de puissance SEP est importante car cette forme va influer sur le facteur de forme du signal SEP et sur le facteur de puissance transmis aux blocs de contrôle 3.

Les signaux de contrôle du bloc 22 permettent de modifier la fréquence ainsi que le facteur de forme du signal de puissance SEP. Dans une réalisation préférentielle de l'invention, le bloc 23 comprend un circuit logique programmable PLD (Programmable Logic Device selon un terme anglo-saxon bien connu de l'homme du métier) permettant un niveau d'intégration élevé en comparaison d'une fonction logique câblée.

Dans une réalisation préférentielle de l'invention, l'acquisition du courant est réalisée par un capteur 247 à effet hall permettant l'isolation du signal de mesure du capteur 247 par rapport au courant traversant le pont en H afin d'augmenter l'immunité du montage aux perturbations électriques présentes dans le signal de puissance véhiculées sur la Ligne de Puissance 41.

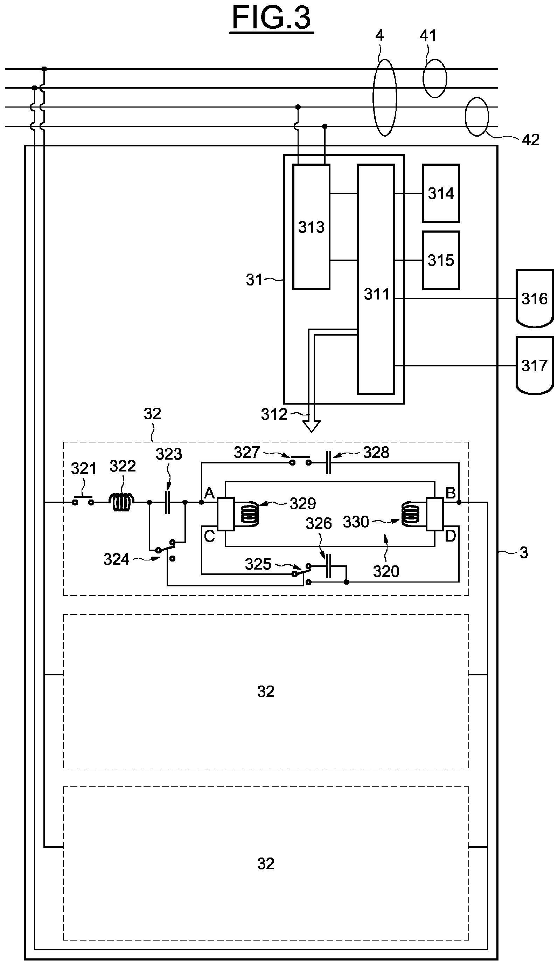

La figure 3 illustre la structure d'un bloc de contrôle 3 dédié à au moins une lampe à décharge 320.

Le bloc de contrôle 3 comprend pour chacune des lampes à décharge 320 auxquelles le bloc est dédié, un circuit électronique 32 destiné à recevoir ladite lampe 320. Le bloc de contrôle 3 comprend également un module de contrôle 31, des capteurs internes ou externes au bloc de contrôle par exemple : un capteur de luminosité ambiante 314 interne dans le bloc de contrôle 3, un capteur de température ambiante 315 interne dans le bloc de contrôle 3, un détecteur de présence à capteur infrarouge 317 externe au bloc de contrôle 3 (par exemple un capteur de type PIR selon un acronyme bien connu de l'homme du métier signifiant présence infrarouge), ou un capteur (non représenté sur la figure 3) pour détecter la présence d'une lampe à décharge 320 dans chacun des circuits électroniques 32, ou encore un capteur 316 de flux lumineux réfléchi par les surfaces éclairées par les lampes à décharges du bloc de contrôle 3, externe au bloc de contrôle 3 et orientable (orienté par exemple vers le bas).

Dans une forme préférentielle de réalisation de l'invention, les blocs de contrôle 3 comprennent chacun deux circuits électriques 32 et deux lampes à décharges de façon à constituer des luminaires pour l'éclairage industriel ou commercial.

Dans une autre réalisation préférentielle, les blocs de contrôle 3 comprennent chacun quatre circuits électriques 32 et quatre lampes à décharges pour réaliser des luminaires destiné à des entreprises du secteur tertiaire, tel que des dalles lumineuses s'intégrant dans le faux plafond de bureaux.

Bien entendu, ces valeurs de nombre de circuits électriques 32 et de lampes à décharge 320 ne sont que des exemples de réalisation. Dans le mode de réalisation illustré sur la figure 3 le bloc de contrôle 3 comprend trois circuits électriques 32 et trois lampes à décharges. Les blocs de contrôle 3 d'un même dispositif électronique 1 peuvent chacun comprendre un nombre de lampes à décharges 320 et de circuits électroniques différent de celui des autres blocs de contrôle. Le fonctionnement des lampes à décharges 320 branchées chacune dans un circuit électronique 32 est géré par le module de contrôle 31.

Le module de contrôle 31 comprend un microcontrôleur programmable 311 disposant d'une interface de communication 313 le reliant à la Ligne de Communication 42. A l'aide de cette interface 313, le module de contrôle peut donc échanger des informations avec le générateur 2. Le module de contrôle 31 est également doté de voies d'acquisition pour des capteurs internes et externes tels que les capteurs 314-317. Parmi les informations échangées avec le générateur 2, on peut compter les résultats des mesures réalisées par le microcontrôleur 311 à l'aide des capteurs internes et externes. Par ailleurs, selon un mode de réalisation préférentiel, le microcontrôleur programmable 311 est géré par un logiciel de gestion programmé dans le microcontrôleur 311.

Le module 31 peut, au moyen de signaux de commutation 312, contrôler les circuits électroniques 32 des lampes à décharge 320. Le module 31 peut, par exemple, assurer la connexion appropriée sur la ligne de puissance 41 des électrodes de chaque lampe à décharge 320 afin de contrôler le préchauffage des filaments de ses électrodes, son allumage et son extinction comme décrit ci après. Pour cela, le module 31 distribue les signaux de commutation 312 à des contacteurs intégrés dans chaque circuit électronique 32.

Les signaux de commutation 312 sont activables en fonction par exemple des mesures effectuées par le microcontrôleur 311 au moyens des capteurs 314-317. Ainsi, le microcontrôleur 311 peut gérer le fonctionnement des lampes à décharge 320 et des circuits électroniques 32 les recevant en fonction de ces mesures. Par exemple, le module 31 peut adapter le nombre de lampes à décharge activées en fonction de l'apport de lumière extérieure ou de la présence de personnes dans l'espace éclairé par les lampes à décharges auxquelles est dédié le bloc de contrôle. Le module 31 peut également contrôler l'efficacité lumineuse des lampes à décharge et leurs éventuelles défaillances. Le module 31 peut en outre adapter le mode d'allumage à la température ambiante ou détecter des surchauffes accidentelles dans un but de maintenance et de sécurité.

Les signaux de commutation 312 sont également activables en fonction d'informations échangées avec le générateur 2. Ainsi, le microcontrôleur 311 peut gérer le fonctionnement des lampes à décharge 320 et des circuits électroniques 32 en fonction d'ordres d'activation ou d'extinction de la part du générateur. Ces ordres peuvent être à destination d'un seul des blocs de contrôle, d'une partie des blocs de contrôle ou même de tous les blocs de contrôle d'un dispositif électronique 1. Un protocole de communication avec des adresses différentes pour chacun des blocs de contrôle et le générateur peut être utilisé pour permettre cela. Par ailleurs, les ordres d'activation ou d'extinction peuvent concerner tout ou partie des circuits électroniques 32 d'un bloc de contrôle 3. Pour cela, les trames avec adresses, échangées entre les blocs de contrôle et le générateur peuvent comprendre des informations concernant le nombre de lampes à décharges à activer ou à éteindre.

La lampe à décharge 320 est, par exemple, une lampe fluorescente ou une lampe utilisant au moins un composé chimique parmi la liste ci après : le néon, les vapeurs de sodium, les vapeurs de mercure, ou les iodures métalliques. La lampe à décharge 320 est munie d'une première borne A, d'une deuxième borne B, d'une troisième borne C et d'une quatrième borne D, les bornes A et C reliant une première électrode 329 et les bornes B et D reliant une deuxième électrode 330.

Le circuit électronique 32 recevant la lampe à décharge 320 comprend trois capacités :

- une capacité 323 ayant une borne gauche branchée sur la connexion du circuit électronique 32 avec la ligne de puissance 41 et une borne droite branchée sur la borne A de la lampe à décharge 320;
- une capacité 326 ayant une borne gauche branchée sur la borne C de la lampe à décharge 320 et une borne droite branchée sur la borne D de la lampe à décharge 320; et

- une capacité 328 ayant une borne gauche branchée sur la borne A de la lampe à décharge 320 et une borne droite branchée sur la borne B de la lampe à décharge 320.

Le circuit électronique 32 comprend également trois contacteurs :

- un contacteur unipolaire 321 ayant une borne gauche branchée en entrée du circuit électronique 32 sur la connexion du circuit électronique 32 avec la ligne de puissance 41 et une borne droite branchée sur la capacité 323. Le contacteur 321 permet donc de contrôler la transmission du signal électrique de puissance SEP au circuit 32. Il peut donc être bloqué pour isoler le circuit 32 et permettre que la lampe 320 ne s'allume pas ou s'éteigne. Il peut également être passant pour raccorder le circuit 32 et permettre que la lampe 320 s'allume ou reste allumée;
- un contacteur unipolaire 327 ayant une borne gauche branchée sur la borne A de la lampe à décharge 320 et une borne droite branchée sur la capacité 328. Le contacteur 327 permet donc de contrôler le branchement ou pas de la capacité 328 en parallèle de la lampe à décharge. Il peut donc être bloqué pour que la capacité 328 ne soit pas branchée en parallèle de la lampe à décharge 320. Il peut également être passant pour que la capacité 328 soit branchée en parallèle de la lampe à décharge 320; et
- un contacteur bipolaire 324/325 ayant un premier pôle 324 branché en parallèle de la capacité 323 capable de la court-circuiter et un deuxième pôle 325 branché en parallèle de la capacité 326 capable de la court-circuiter. Le contacteur bipolaire 324/325 permet donc de court-circuiter ou pas les capacités 323 et 326. Ainsi, dans le cas où le contacteur bipolaire est bloqué, la capacité 323 n'est pas court-circuitée et la capacité 326 est court-circuitée. Dans le cas où le contacteur bipolaire est passant, la capacité 326 n'est pas court-circuitée et la capacité 323 est court-circuitée.

Les contacteurs 321, 327, 324/325 sont contrôlés par les signaux de commutation 312. Dans un mode de réalisation préférentiel, ces contacteurs sont constitués de relais électromagnétiques. Dans un autre mode de réalisation, ils peuvent se composer de commutateurs électroniques statiques.

Le circuit électronique 32 comprend également une bobine 322 branchée entre le contacteur 321 et la capacité 323.

Le circuit électronique 32 peut donc d'une part être isolé de la ligne de puissance 41 et peut d'autre part être placé dans les configurations suivantes en fonction des signaux de commutation 312 générés par le microcontrôleur programmable 311:

- une première configuration selon laquelle le contacteur 327 est bloqué et le contacteur bipolaire 324/325 est bloqué. Dans ce cas, la capacité 323 est branché en série avec la lampe à décharge, il y a un fil reliant les électrodes par les bornes C et D de la lampe à décharge et il n'y pas de capacité 328 branchée en parallèle de la lampe à décharge. Ainsi, la lampe à décharge est court-circuitée au travers de ses électrodes ce qui provoque l'échauffement des filaments des électrodes par effet Joule;
- une deuxième configuration selon laquelle le contacteur 327 est bloqué et le contacteur bipolaire 324/325 est passant. Dans ce cas, la capacité 323 est court-circuitée et la capacité 326 est branchée entre les bornes C et D des électrodes 329 et 330 de la lampe à décharge. La capacité 326 permet une conservation du courant circulant dans les électrodes pour conserver l'échauffement des filaments des électrodes; et
- une troisième configuration selon laquelle le contacteur 327 est passant et le contacteur bipolaire 324/325 est passant. Dans ce cas la capacité 323 est court-circuitée, la capacité 326 est branchée entre les bornes C et D des électrodes 329 et 330 de la lampe à décharge et la capacité 328 est branchée en parallèle de la lampe à décharge.

La première configuration correspond à une étape d'échauffement des électrodes.

La deuxième configuration correspond à une étape de transition et à une étape de conservation de l'allumage de la lampe à décharge.

La troisième configuration correspond à une étape d'allumage de la lampe à décharge.

Nous allons ci-dessous donner un exemple d'enchaînement de ces différentes configurations et des échanges avec le générateur.

Dans un premier temps un ordre d'allumage en provenance du générateur 2 est envoyé à au moins un bloc de contrôle 3.

Le module de contrôle 31 du bloc de contrôle concerné détermine alors si le préchauffage des électrodes est nécessaire. Pour cela, il fait notamment appel aux mesures de température réalisées à l'aide du capteur 315.

Dans le cas où ce préchauffage est nécessaire, le module de contrôle place les circuits de mesure 32 concernés par l'activation dans la première configuration. La durée de préchauffage pendant laquelle le module de contrôle place lesdits circuits de mesure 32 dans la première configuration est calculée de manière à ce que les électrodes atteignent la température de 1000°C. Cette durée dépend notamment des mesures de température réalisées à l'aide du capteur 315.

Dans la configuration 1, le courant du signal électrique de puissance circule dans la lampe à décharge 320 au travers d'un circuit série constitué de la bobine 322, du condensateur 323 et de chacune des électrodes 329 et 330 de la lampe à décharge 32.

Le condensateur 323 est calculé pour produire un effet résonant avec la bobine 322 afin de réduire l'impédance globale du circuit L-C pour générer un courant moyen adapté à la caractéristique des électrodes 329 et 330 de la lampe à décharge 320. Le courant moyen ainsi obtenu est suffisant pour produire l'échauffement souhaité au niveau des filaments des électrodes 329/330 et ainsi permettre l'échauffement des filaments à une température de l'ordre de 1000°C.

On conserve la configuration 1 pendant la durée de préchauffage prévue par le microcontrôleur 311 en fonction notamment de la température ambiante acquise du capteur 314, ensuite on active la configuration 2 puis la configuration 3 pendant une durée de l'ordre de 250 ms.

Dans le cas où le préchauffage n'est pas nécessaire, on active directement la configuration 2 puis la configuration 3 pendant une durée de l'ordre de 250 ms.

Dans tous les cas, simultanément à l'activation de la configuration 3, le signal électrique de puissance SEP avec une fréquence ajustée est envoyé par la Ligne de Puissance 41 du Bus Filaire 4. La fréquence est ajustée par le générateur 2 de telle façon que la fréquence du signal de puissance soit proche de la fréquence de résonance Fr du circuit constitué par la bobine 322 d'inductance L et le condensateur 328 de capacité C. La fréquence de résonnance peut être déterminée à l'aide de la formule $Fr = \frac{1}{2\pi\sqrt{L/C}}$ soit 49,5 kHz en considérant L = 2,2mH et C = 4,7nF.

L'ajustement de la fréquence du signal électrique de puissance est, par exemple, la conséquence d'un message de la part d'un des blocs de contrôle 3 vers le générateur. Il peut également être déclenché automatiquement par le générateur lui-même qui dispose déjà d'informations relatives à la température et à la durée prévue par le microcontrôleur 311 d'un préchauffage du ou des blocs qui doivent être allumés.

La durée pendant laquelle la fréquence du signal électrique de puissance SEP prend la valeur de la fréquence de résonnance Fr est faible, de l'ordre de 250 ms. Cela permet de ne pas perturber les autres blocs de contrôle partageant le même bus de puissance qui sont par exemple en configuration 2 de poursuite d'allumage.

Lorsque le circuit électronique est placé en configuration 3, le courant du signal électrique de puissance SEP à la fréquence de résonnance circule au travers d'un circuit série résonant constitué de la bobine 322 et du condensateur 328. Il provoque donc une surintensité telle que le courant combiné à l'impédance du condensateur 328 produit une élévation importante de la tension aux bornes de la lampe à décharge 320. Ce qui déclenche sa conduction et son allumage.

Le microcontrôleur 311 vérifie l'allumage correct de la lampe à décharge 32 en mesurant la luminosité ambiante par le capteur le lumière 314 et en cas de défaillance peut réactiver plusieurs fois la séquence d'activation du contacteur 327 pour effectuer un nombre prévu de tentatives d'allumage.

A l'issu de l'allumage, le microcontrôleur 31 place les circuits électroniques 32 dans la configuration 2 qui permet la conservation de l'allumage. Dans cette configuration, le condensateur 326 permet d'assurer le maintien d'un courant minimal au travers de chaque filament 326 de la lampe à décharge 320 après l'étape d'allumage.

Dans une réalisation préférentielle de l'invention, le courant minimal au travers des électrodes 329-330 permet de maintenir les filaments de ces électrodes à une température suffisante afin de conserver à l'intérieur de la lampe à décharge un état plasmatique même lorsque le signal électrique de puissance SEP comporte des durées pendant lesquelles le courant est nul, ces durées étant susceptibles de provoquer l'extinction de la lampe à décharge.

Une information sur l'état de fonctionnement du circuit électronique peut être transmise par le Module de Contrôle 31 sur la Ligne de Communication 42 du Bus Filaire 4 à destination du générateur. Ce dernier ajuste alors le régime du signal électrique de puissance de façon à produire la luminosité prévue pour le segment qu'il pilote. Par exemple, la fréquence du signal électrique de puissance peut être ajustée par le générateur, cela permet une variation de l'impédance de la bobine 322 et donc de l'intensité lumineuse de la lampe à décharge 320.

Par ailleurs, sur demande du générateur 2, en fonction de la programmation du microcontrôleur 22, le module de contrôle 31 peut éteindre une lampe à décharge 320 en ouvrant le contacteur 321. En outre, en cours de fonctionnement, et en fonction du logiciel de gestion programmé dans le microcontrôleur 311, le module de contrôle 31 est à même d'adapter le nombre de circuits électroniques 32 activés ou éteints en fonction, par exemple la luminosité réfléchie par les surfaces éclairées par l'ensemble des lampes à décharges des circuits électroniques compris dans le bloc de contrôle 3. Cette luminosité est par exemple mesurée par le capteur de lumière orientable 316 (par exemple orienté vers le bas). Dans une autre fonctionnalité, le module de contrôle 31 est à même d'activer ou de désactiver un ou plusieurs circuits électroniques 32 en fonction de la présence de personnes détectée par son capteur de rayonnement infrarouge 317.

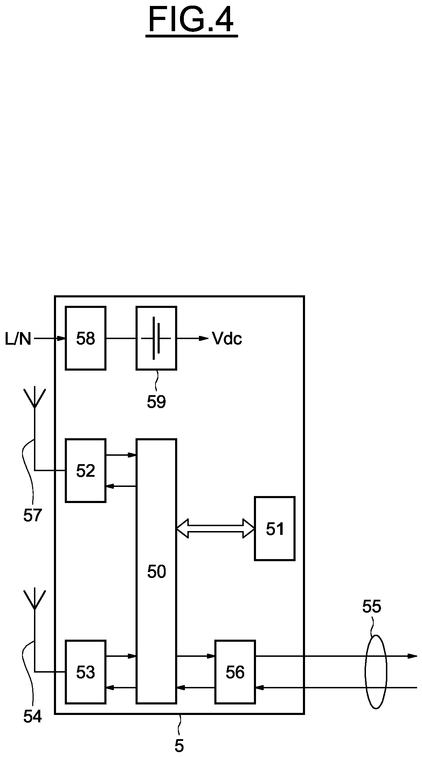

La figure 4 décrit l'architecture de la centrale informatique 5. Une telle centrale informatique 5 peut gérer le fonctionnement d'un système d'éclairage comprenant de multiples dispositifs électroniques 1, chacun de ces dispositifs correspondant à un segment de ce système d'éclairage.

La centrale informatique 5 comprend une mémoire non volatile 51 et un microcontrôleur 50 qui est doté d'une capacité d'archivage de données dans la mémoire 51. Le microcontrôleur 50 est alimenté par une tension continue Vdc produite à partir de la tension secteur L/N, par un module de conversion et de régulation de tension 58 équipé d'une batterie tampon 59 assurant un secours d'alimentation en cas de perte de la tension secteur. La centrale informatique 5 est donc dotée d'une capacité de traitement et d'archivage de données programmable,

La centrale informatique 5 comprend également un module d'interface de communication sans fil 52 et une antenne 57. La centrale informatique 5 peut ainsi communiquer avec les blocs 22 de chaque générateur 2. Selon un mode de réalisation, la centrale informatique 5 peut contrôler le signal SEP et les ordres envoyés par les générateurs 2.

La centrale informatique 5 comprend en outre une interface d'accès au réseau Internet 53 et un module d'accès Internet sans fil 54 (réseau 3G+, par exemple). La centrale informatique 5 est ainsi équipée d'une voie de communication sans fil permettant la connexion d'un ordinateur externe via le réseau Internet.

La centrale informatique comprend également une interface 56 de raccordement d'un ordinateur et une liaison série filaire 55 de type USB ou RS232. La centrale informatique 5 permet ainsi le raccordement direct d'un ordinateur externe.

La communication d'un micro-ordinateur externe avec la centrale informatique 5, soit par la liaison filaire 55, soit par la liaison sans fil 54 au travers du réseau Internet est utilisée afin de commander à distance le fonctionnement du système d'éclairage par des contrôles et des commandes agissant sur les modules de contrôle 31 qui assurent chacun le fonctionnement des lampes à décharge, ces commandes étant acheminées par le biais des générateurs 2 et de la Ligne de Communication 42 du Bus 4.

La communication entre le micro-ordinateur externe et la centrale informatique 5 permet également de collecter, archiver et traiter des informations et des données relatives au fonctionnement de chaque circuit électronique 32, ces informations et données étant élaborées par chaque Module de Contrôle 31 et transmises au générateur 2 de chaque segment 1 par la Ligne de Communication 42 du Bus 4, pour être ensuite transmises à la centrale informatique 5 par le réseau de communication sans fil entre les générateurs 2 et le centrale informatique 5.

Ainsi, au sein du système d'éclairage comprenant de multiples dispositifs électroniques 1, chacun de ces dispositifs correspondant à un segment de ce système d'éclairage, la centrale informatique 5 est le point d'accès via le réseau Internet, permettant le pilotage de l'installation et la collecte des données de fonctionnement et de performance. Ces données sont également stockées dans la mémoire 51 de la centrale informatique 5 de façon à constituer une archive locale non volatile. L'accès aux fonctionnalités de la centrale informatique 5 peut également être effectué par la liaison filaire 55 assurant une redondance en cas de défaillance de la liaison au réseau Internet.

Par ailleurs, en cas de perte de la communication entre un générateur 2 et la centrale informatique 5 du site, deux modes de fonctionnement sont prévus chacun correspondant à un mode de réalisation. Ces modes de fonctionnement permettent d'assurer l'éclairage par le dispositif 1 indépendamment de la liaison sans fil 57.

Selon un premier mode de réalisation, l'activation des blocs de contrôle 3 du segment ou dispositif 1 peut être assurée par une commande à l'aide des courants porteurs sur la tension secteur L/N alimentant le générateur 2.

Selon un autre mode de réalisation, le générateur 2 ne disposant plus d'une communication fiable avec la centrale informatique 5 du site, gère automatiquement les blocs de contrôle 3 composant son segment 1, soit en poursuivant le fonctionnement en cours au moment de la rupture de la communication, soit en déclenchant l'allumage des blocs de contrôle 3 composant son segment 1 et leur fonctionnement dans un mode élémentaire prévu dans sa programmation.

Selon ces deux modes de réalisation, les informations relatives à cette défaillance ainsi que les données fonctionnelles du segment sont alors mémorisées dans le microcontrôleur 22 du générateur 2 afin d'être transmises à la centrale informatique 5 lorsque la communication est redevenue fiable.

Dans une autre réalisation préférentielle de l'invention, le générateur 2 peut être dédoublé par un second générateur identique afin d'assurer une redondance en cas de panne. Dans une telle configuration, l'activation de l'un ou l'autre des deux générateurs est géré par la centrale informatique 5 du site, par la communication sans fil 57. L'information de défaillance peut être transmise via le réseau Internet 54 pour la gestion de maintenance.

## Revendications

1. Dispositif ( 1 ) électronique de contrôle et d'alimentation de lampes à décharge (320) comprenant :

    - un générateur (2) de signaux de puissance ; et
    - une pluralité de blocs de contrôle (3) dédiés chacun au contrôle d'au moins une lampe à décharge (320), lesdits blocs de contrôle (3) étant reliés en parallèle audit générateur (2) par un unique bus de puissance (41), chacun des blocs de contrôle (3) comprenant, pour chacune des lampes (320) auxquelles le bloc est dédié, un module de contrôle (31) et un circuit électronique (32) relié à ladite lampe (320) et au bus de puissance (41), ledit circuit électronique (32) comprenant des moyens de résonnance (322, 328) adaptés pour résonner à une fréquence d'un signal de puissance dudit générateur (2) de manière à créer une surtension aux bornes de ladite lampe à décharge (320) et déclencher son allumage, ledit générateur (2) de puissance comprenant un étage de correction du facteur de puissance adapté pour délivrer une tension continue supérieure à 300V au bus de puissance à partir de la tension secteur ;

**caractérisé en ce que** les moyens de résonnance (322, 328) comprennent un composant inductif (322) et un composant capacitif (328) et le circuit électronique (32) est configuré pour fonctionner suivant une configuration normale dans laquelle le composant inductif (322) est branché en série avec la lampe à décharge (320) et le composant capacitif (328) n'est pas branché et une configuration d'allumage dans laquelle le composant inductif (322) est branché en série avec la lampe à décharge (320) et le composant capacitif (328) est branché en parallèle de la lampe à décharge (320), les configurations étant activables sélectivement par le module de contrôle (31).

**2.** Dispositif selon la revendication 1, dans lequel le module de contrôle (31) des circuits électroniques (32) est adapté pour communiquer via un canal de communication bidirectionnelle (4) avec un module de communication (25) du générateur (2), le générateur (2) étant adapté pour contrôler les circuits électroniques (32) de chacun des blocs de contrôle (3) au moyen de ladite communication entre le générateur (2) et le module de contrôle (31).

**3.** Dispositif selon la revendication 2, dans lequel le canal de communication bidirectionnelle (4) est réalisé au moyen d'une modulation des courants porteurs du bus de puissance (41).

**4.** Dispositif selon la revendication 2, dans lequel le canal de communication bidirectionnelle (4) est un bus de communication (42) dédié reliant le générateur (2) à chacun des blocs de contrôle (3).

**5.** Dispositif selon l'une quelconque des revendications 2 à 4, dans lequel le générateur (2) est adapté pour ajuster la fréquence, l'amplitude et/ou la forme du signal de puissance en fonction de la communication avec ledit module de contrôle (31) d'un bloc de contrôle (3).

**6.** Dispositif selon l'une quelconque des revendications précédentes, dans lequel le circuit électronique (32) comprend un deuxième composant capacitif (323) branché entre le composant inductif (322) et la lampe à décharge (320), le deuxième composant capacitif (323) pouvant être court-circuité par un premier moyen de commutation (324) du circuit électronique pour permettre un branchement direct du composant inductif (322) sur la lampe à décharge ou un branchement du composant inductif (322) sur la lampe à décharge au travers dudit deuxième composant capacitif (323).

**7.** Dispositif selon l'une quelconque des revendications précédentes, dans lequel le circuit électronique (32) comprend un troisième composant capacitif (326) branché entre les deux électrodes (329, 330) de la lampe à décharge (320), le troisième composant capacitif (326) pouvant être court-circuité par un deuxième moyen de commutation (325) du circuit électronique pour permettre un raccordement direct des deux électrodes (329, 330) de la lampe à décharge (320) ou un raccordement desdites deux électrodes (329, 330) au travers dudit troisième composant capacitif (326).

**8.** Dispositif selon l'une quelconque des revendications précédentes, dans lequel le circuit électronique (32) comprend un troisième moyen de commutation (321) adapté pour isoler ledit circuit électronique (32) du bus de puissance (41).

**9.** Dispositif selon l'une quelconque des revendications 6 à 8, dans lequel le module de contrôle (31) est adapté pour contrôler les moyens de commutation (321, 324, 325) de chacun des circuits électroniques (32).

**10.** Dispositif selon l'une quelconque des revendications précédentes, dans lequel le bloc de contrôle (3) comprend au moins un capteur choisi parmi un capteur de luminosité (314), un capteur de température (315), un capteur du flux lumineux (316) réfléchi par les surfaces éclairées par les lampes à décharge (320) du bloc de contrôle (3) et un capteur de présence infrarouge (317), le module de contrôle (31) étant relié audit au moins un capteur (314-317).

**11.** Dispositif selon la revendication 10 prise en dépendance de la revendication 2, dans lequel le module de contrôle (31) est adapté pour communiquer les résultats des mesures réalisées à l'aide dudit au moins un capteur au générateur (2).

**12.** Dispositif selon l'une quelconque des revendications précédentes, dans lequel le générateur (2) comprend un étage de conversion (24) doté d'un pont de transistors en H (241-246) pour produire à partir de ladite tension continue ledit signal de puissance, ledit signal de puissance étant alternatif.

**13.** Ensemble comprenant une centrale informatique (5) et au moins un dispositif (1) selon l'une des revendications 1 à 12, ladite centrale comprenant des moyens de traitement et d'archivage (51) et un moyen de communication (52, 57), ledit générateur du dispositif (1) comprenant en outre un moyen de communication (26, 261) configuré pour communiquer avec le moyen de communication (52, 57) de ladite centrale informatique.

## Patentansprüche

1. Elektronische Vorrichtung (1) zur Steuerung und Versorgung von Entladungslampen (320), umfassend:

   - einen Leistungssignalgenerator (2); und
   - eine Vielzahl von Steuerungsblöcken (3), die jeweils zur Steuerung mindestens einer Entladungslampe (320) bestimmt sind, wobei die Steuerungsblöcke (3) mit dem Generator (2) über einen einzigen Leistungsbus (41) parallel geschaltet sind, wobei jeder der Steuerungsblöcke (3) für jede der Lampen (320), für die der Block bestimmt ist, ein Steuerungsmodul (31) und eine elektronische Schaltung (32) umfasst, die mit der Lampe (320) und dem Leistungsbus (41) verbunden ist, wobei die elektronische Schaltung (32) Resonanzmittel (322, 328) aufweist, die angepasst sind, bei einer Frequenz eines Leistungssignals des Generators (2) in Resonanz zu treten, um eine Überspannung an den Anschlussklemmen der Entladungslampe (320) zu erzeugen und ihre Zündung auszulösen, wobei der Leistungsgenerator (2) eine Korrekturstufe des Leistungsfaktors umfasst, die angepasst ist, aus der Netzspannung eine Gleichspannung von mehr als 300 V an den Leistungsbus zu liefern;

   **dadurch gekennzeichnet, dass** die Resonanzmittel (322, 328) ein induktives Bauelement (322) und ein kapazitives Bauelement (328) umfassen und die elektronische Schaltung (32) konfiguriert ist, um gemäß einer normalen Konfiguration, in der das induktive Bauelement (322) mit der Entladungslampe (320) in Reihe geschaltet ist und das kapazitive Bauelement (328) nicht angeschlossen ist, und einer Zündkonfiguration zu arbeiten, in der das induktive Bauelement (322) mit der Entladungslampe (320) in Reihe geschaltet ist und das kapazitive Bauelement (328) parallel zur Entladungslampe (320) geschaltet ist, wobei die Konfigurationen durch das Steuerungsmodul (31) selektiv aktivierbar sind.

2. Vorrichtung nach Anspruch 1, in der das Steuerungsmodul (31) der elektronischen Schaltungen (32) angepasst ist, über einen bidirektionalen Datenübertragungskanal (4) mit einem Datenübertragungsmodul (25) des Generators (2) Daten auszutauschen, wobei der Generator (2) angepasst ist, die elektronischen Schaltungen (32) jedes Steuerungsblocks (3) mittels der Datenübertragung zwischen dem Generator (2) und dem Steuerungsmodul (31) zu steuern.

3. Vorrichtung nach Anspruch 2, wobei der bidirektionale Datenübertragungskanal (4) durch Modulation der Trägerströme des Leistungsbusses (41) verwirklicht ist.

4. Vorrichtung nach Anspruch 2, wobei der bidirektionale Datenübertragungskanal (4) ein Datenübertragungsbus (42) ist, der bestimmt ist, den Generator (2) mit jedem der Steuerungsblöcke (3) zu verbinden.

5. Vorrichtung nach einem der Ansprüche 2 bis 4, wobei der Generator (2) angepasst ist, um die Frequenz, Amplitude und/oder Form des Leistungssignals abhängig von der Datenübertragung mit dem Steuerungsmodul (31) eines Steuerungsblocks (3) einzustellen.

6. Vorrichtung nach einem der vorhergehenden Ansprüche, wobei die elektronische Schaltung (32) ein zweites kapazitives Bauelement (323) umfasst, das zwischen das induktive Bauelement (322) und die Entladungslampe (320) geschaltet ist, wobei das zweite kapazitive Bauelement (323) durch ein erstes Schaltmittel (324) der elektronischen Schaltung kurzschließbar ist, um einen direkten Anschluss des induktiven Bauelements (322) an der Entladungslampe oder einen Anschluss des induktiven Bauelements (322) an der Entladungslampe durch das zweite kapazitive Bauelement (323) zu ermöglichen.

7. Vorrichtung nach einem der vorhergehenden Ansprüche, wobei die elektronische Schaltung (32) ein drittes kapazitives Bauelement (326) umfasst, das zwischen die beiden Elektroden (329, 330) der Entladungslampe (320) geschaltet ist, wobei das dritte kapazitive Bauelement (326) durch ein zweites Schaltmittel (325) der elektronischen Schaltung kurzschließbar ist, um einen direkten Anschluss der beiden Elektroden (329, 330) der Entladungslampe (320) oder einen Anschluss der beiden Elektroden (329, 330) durch das dritte kapazitive Bauelement (326) zu ermöglichen.

8. Vorrichtung nach einem der vorhergehenden Ansprüche, wobei die elektronische Schaltung (32) ein drittes Schaltmittel (321) aufweist, das angepasst ist, die elektronische Schaltung (32) vom Leistungsbus (41) zu isolieren.

9. Vorrichtung nach einem der Ansprüche 6 bis 8, wobei das Steuerungsmodul (31) dazu angepasst ist, die Schaltmittel (321, 324, 325) jeder der elektronischen Schaltungen (32) zu steuern.

**10.** Vorrichtung nach einem der vorhergehenden Ansprüche, wobei der Steuerungsblock (3) mindestens einen Sensor umfasst, der aus einem Helligkeitssensor (314), einem Temperatursensor (315), einem Sensor für den Lichtstrom (316), der von den durch die Entladungslampen (320) des Steuerungsblocks (3) beleuchteten Oberflächen reflektiert wird, und einem Infrarot-Anwesenheitssensor (317) ausgewählt ist, wobei das Steuerungsmodul (31) mit dem mindestens einen Sensor (314 bis 317) verbunden ist.

**11.** Vorrichtung nach Anspruch 10 in Abhängigkeit des Anspruchs 2, wobei das Steuerungsmodul (31) angepasst ist, die Ergebnisse von Messungen, die mit Hilfe des mindestens einen Sensors durchgeführt wurden, an den Generator (2) zu übermitteln.

**12.** Vorrichtung nach einem der vorhergehenden Ansprüche, wobei der Generator (2) eine Wandlerstufe (24) umfasst, die mit einer H-Transistorbrücke (241 bis 246) ausgestattet ist, um aus der Gleichspannung das Leistungssignal zu erzeugen, wobei das Leistungssignal alternierend ist.

**13.** Anordnung, die einen Zentralrechner (5) und mindestens eine Vorrichtung (1) nach einem der Ansprüche 1 bis 12 umfasst, wobei die Zentrale Verarbeitungs- und Archivierungsmittel (51) und Datenübertragungsmittel (52, 57) umfasst, wobei der Generator der Vorrichtung (1) ferner ein Datenübertragungsmittel (26, 261) umfasst, das konfiguriert ist, um mit dem Datenübertragungsmittel (52, 57) des Zentralrechners Daten auszutauschen.

## Claims

**1.** Electronic device (1) for controlling and powering discharge lamps (320) comprising:

- a generator (2) of power signals; and
- a plurality of control units (3), each dedicated to controlling at least one discharge lamp (320), said control units (3) being connected in parallel to said generator (2) by a single power bus (41), each of the control units (3) comprising, for each of the lamps (320) to which the unit is dedicated, a control module (31) and an electronic circuit (32) connected to said lamp (320) and to the power bus (41), said electronic circuit (32) comprising resonance means (322, 328) capable of resonating at a frequency of a power signal from said generator (2) so as to create an overvoltage at the terminals of said discharge lamp (320) and trigger it to switch on, said power generator (2) comprising a stage for correcting the power factor, this stage being capable of delivering a direct current voltage of more than 300V from the mains voltage to the power bus;

**characterised in that** the resonance means (322, 328) comprise an inductive component (322) and a capacitive component (328) and the electronic circuit (32) is configured to function according to a standard configuration in which the inductive component (322) is connected in series to the discharge lamp (320) and the capacitive component (328) is not connected, and a switching on configuration in which the inductive component (322) is connected in series to the discharge lamp (320), and the capacitive component (328) is connected in parallel to the discharge lamp (320), the configurations being able to be activated selectively by the control module (31).

**2.** Device according to Claim 1, wherein the control module (31) of the electronic circuits (32) is capable of communicating via a two-way communication channel (4) with a communication module (25) of the generator (2), the generator (2) being capable of controlling the electronic circuits (32) of each of the control units (3) by means of said communication between the generator (2) and the control module (31).

**3.** Device according to Claim 2, wherein the two-way communication channel (4) is achieved by modulating carrier currents of the power bus (41).

**4.** Device according to Claim 2, wherein the two-way communication channel (4) is a dedicated communication bus (42) connecting the generator (2) to each of the control units (3).

**5.** Device according to any one of Claims 2 to 4, wherein the generator (2) is capable of adjusting the frequency, the amplitude and/or the shape of the power signal according to the communication with said control module (31) of a control unit (3).

**6.** Device according to any one of the preceding claims, wherein the electronic circuit (32) comprises a second capacitive component (323) connected between the inductive component (322) and the discharge lamp (320), the second capacitive component (323) being able to be bypassed by a first switching means (324) of the electronic circuit so as to allow the inductive component (322) to be connected directly to the discharge lamp, or the inductive component (322) to be connected to the discharge lamp through said second capacitive component (323).

**7.** Device according to any one of the preceding claims, wherein the electronic circuit (32) comprises a third capacitive component (326) connected between the two electrodes (329, 330) of the discharge lamp (320), the third capacitive component (326) being able to be bypassed by a second switching means (325) of the electronic circuit so as to allow the two electrodes (329, 330) of the discharge lamp (320) to be connected directly, or said two electrodes (329, 330) to be connected through said third capacitive component (326).

**8.** Device according to any one of the preceding claims, wherein the electronic circuit (32) comprises a third switching means (321) capable of isolating said electronic circuit (32) of the power bus (41).

**9.** Device according to any one of Claims 6 to 8, wherein the control module (31) is capable of controlling the switching means (321, 324, 325) of each of the electronic circuits (32).

**10.** Device according to any one of the preceding claims, wherein the control unit (3) comprises at least one sensor chosen among a light sensor (314), a temperature sensor (315), a sensor (316) of the luminous flux reflected by the surfaces illuminated by the discharge lamps (320) of the control unit (3) and an infrared presence sensor (317), the control module (31) being connected to said at least one sensor (314 - 317).

**11.** Device according to Claim 10 taken in dependence of Claim 2, wherein the control module (31) is capable of communicating the results of measurements taken by means of said at least one sensor to the generator (2).

**12.** Device according to any one of the preceding claims, wherein the generator (2) comprises a conversion stage (24) endowed with an H bridge of transistors (241 - 246) for producing, from said direct current voltage, said power signal, said power signal being alternating.

**13.** Assembly comprising a computer system (5) and at least one device (1) according to one of Claims 1 to 12, said system comprising processing and storage means (51) and communication means (52, 57), said generator of the device (1) furthermore comprising communication means (26, 261) configured to communicate with communication means (52, 57) of said computer system.

# FIG.1

1 4 41 42
L/N
261 26 2
3 3 3 ••• 3

1 4 41 42
L/N
261 26 2
3 3 3 ••• 3

1 4 41 42
L/N
261 26 2
3 3 3 ••• 3

L/N
57
52
5

# FIG.2

21
0V
+V
L/N
243
244
245
246
241
242
23
22
249
248
247
24
4
41
42
26
25
261
2

FIG.3
4
41
42
313
314
315
31
311
316
317
32
312
327
328
323
321
322
A
B
329
326
330
C
D
324
325
320
3
32
32

FIG.4

L/N
58
Vdc
59
52
57
51
50
55
53
56
54
5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20060186834 A
- US 5371442 A
- WO 03102890 A2
- US 5747942 A
- US 474991 A
- US 4132925 A
- WO 2005036726 A1
- US 2011122165 A1
- US 6771029 B2